# EUROPÄISCHE PATENTSCHRIFT

(11) **EP 3 766 051 B1**
(45) Veröffentlichungstag und Bekanntmachung des Hinweises auf die Patenterteilung: **07.05.2025**
(21) Anmeldenummer: 19713363.0
(22) Anmeldetag: 07.03.2019
(51) Int. Cl.: G07C 9/30, G07F 17/24, G06Q 20/38, E04H 6/42, G07C 9/00

(54) **VERFAHREN ZUR ÜBERGABE EINES KRAFTFAHRZEUGS AN EIN AUTOMATISCHES PARKSYSTEM, AUTOMATISCHES PARKSYSTEM UND KRAFTFAHRZEUG**
METHOD FOR TRANSFERRING A MOTOR VEHICLE TO AN AUTOMATIC PARKING SYSTEM, AUTOMATIC PARKING SYSTEM, AND MOTOR VEHICLE
PROCÉDÉ DE REMISE D'UN VÉHICULE AUTOMOBILE À UN SYSTÈME DE STATIONNEMENT AUTOMATIQUE, SYSTÈME DE STATIONNEMENT AUTOMATIQUE ET VÉHICULE AUTOMOBILE

(30) Priorität: 12.03.2018 DE 102018203685
(43) Veröffentlichungstag der Anmeldung: 20.01.2021
(73) Patentinhaber: Audi AG, 85049 Ingolstadt (DE)
(72) Erfinder: BADOUIN, David Alexander, 85049 Ingolstadt (DE); FEIST, Christian, 85049 Ingolstadt (DE)
(86) Internationale Anmeldenummer: PCT/EP2019/055713
(87) Internationale Veröffentlichungsnummer: WO 2019/175015

(56) Entgegenhaltungen:
- DE-A1- 102015 121 113
- DE-A1- 102015 208 068
- DE-A1- 102016 014 327
- DE-A1- 102016 207 139
- JP-A- 2016 006 603
- US-A1- 2003 069 665
- US-A1- 2012 111 937
- US-A1- 2014 066 110
- US-A1- 2018 053 422

## Beschreibung

Die Erfindung betrifft ein Verfahren zur Übergabe eines Kraftfahrzeugs an ein automatisches Parksystem, das dazu eingerichtet ist, das Kraftfahrzeug fahrerlos zu einem freien Stellplatz des Parksystems zu überführen, nach dem Oberbegriff des Anspruchs 1. Die Erfindung betrifft weiterhin ein automatisches Parksystem nach dem Oberbegriff des Anspruchs 5.

Ein Verfahren nach dem Oberbegriff des Anspruchs 1 und ein automatisches Parksystem nach dem Oberbegriff des Anspruchs 5 sind aus US 2003/0069665 A1 bekannt.

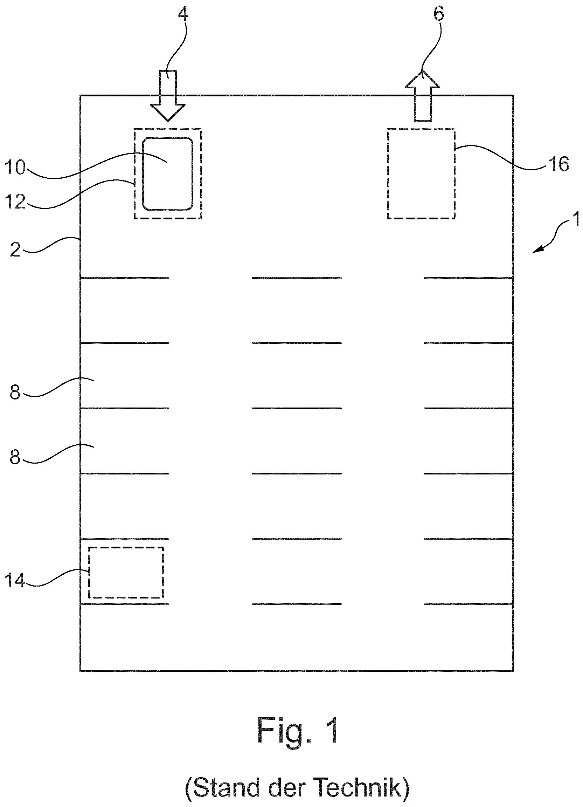

Weitere automatische Parksysteme und Verfahren zu deren Betrieb sind aus DE 10 2016 207 139 A1, US 2018/0053422 A1, US 2014/0066110 A1, DE 10 2015 121 113 A1, US 2012/0111937 A1**,** JP2016006603A und DE 10 2015 208 068 A1 bekannt. Ferner sind aus DE 10 2014 221 745 A1 beispielsweise ein Verfahren und System zur Überwachung eines Kraftfahrzeugs auf einem Parkplatz bekannt. Wie in Fig. 1 schematisch gezeigt, umfasst das Parksystem 1 einen Parkplatz 2 mit einer Einfahrt 4, einer Ausfahrt 6, sowie mit einer Vielzahl von Stellplätzen 8. Ein Kraftfahrzeug 10 wird von einem Kraftfahrzeugnutzer zu einer Übergabezone 12 des Parkplatzes 2 gefahren und an einen Parkplatzbetreiber übergeben. Anschließend wird das Kraftfahrzeug 10 entweder autonom oder durch Personal auf einen freien Stellplatz 14 überführt. Nach Anforderung durch den Kraftfahrzeugnutzer wird das Kraftfahrzeug 10 durch den Parkplatzbetreiber zu einer Abholzone 16 überführt und von dem Kraftfahrzeugnutzer wieder in Empfang genommen. Aus DE 2016 014 327 A1 ist ein Verfahren zum Bezahlen einer Parkgebühr bekannt, wobei eine zu zahlende Parkgebühr auf einer Anzeigeeinheit eines Kraftfahrzeugs angezeigt wird.

Die JP2016006603A beschreibt ein System zur autonomen Parkverwaltung, bei dem ein Fahrzeug anhand von Kommunikationsdaten eine Parkposition zugewiesen bekommt. Die Steuerung erfolgt durch ein Managementgerät, das die Parkposition basierend auf Fahrzeuginformationen und Abfahrtsplänen bestimmt und sicherstellt, dass Fahrzeuge durch autonome Operationen effizient ein- und ausgeparkt werden, wobei die Authentifizierung über temporäre Passwörter erfolgt.

Weiterhin ist aus DE 10 2015 209 190 A1 ein Verfahren zur nutzerdefinierten Bereitstellung eines Kraftfahrzeugs bekannt, bei dem die Trajektorie des Kraftfahrzeugs bis zum Erreichen einer Parkposition gespeichert wird, so dass das Kraftfahrzeug an einem beliebigen Punkt der Trajektorie wieder abgeholt werden kann.

Die DE 10 2014 205 122 A1 beschreibt andererseits eine Anordnung zum Überwachen einer autonomen Fahrt eines Kraftfahrzeugs. Dabei wird von dem Kraftfahrzeug ein Aufforderungssignal an einen Kraftfahrzeugnutzer ausgegeben, wobei die autonome Fahrt in Abhängigkeit von einem Antwortsignal des Kraftfahrzeugnutzers durchgeführt wird.

Aufgabe der vorliegenden Erfindung ist es, ein verbessertes Verfahren zur Übergabe eines Kraftfahrzeugs an ein automatisches Parksystem sowie ein automatisches Parksystem zu schaffen.

Diese Aufgabe wird durch ein Verfahren mit den Merkmalen des Anspruchs 1 und ein Parksystem mit den Merkmalen des Anspruchs 5 gelöst. Vorteilhafte Ausgestaltungen mit zweckmäßigen Weiterbildungen der Erfindung sind in den abhängigen Patentansprüchen angegeben.

Das erfindungsgemäße Verfahren zur Übergabe eines Kraftfahrzeugs an ein automatisches Parksystem, das dazu eingerichtet ist, das Kraftfahrzeug fahrerlos zu einem freien Stellplatz des Parksystems zu überführen, ist dadurch gekennzeichnet, dass durch das Parksystem ein Freigabe-Code an das Kraftfahrzeug übermittelt wird, der für einen Kraftfahrzeugnutzer wahrnehmbar in dem Kraftfahrzeug ausgegeben wird. Erfindungsgemäß übermittelt der Kraftfahrzeugnutzer nach Verlassen des Kraftfahrzeugs diesen Freigabe-Code wiederum an das Parksystem, um hierdurch eine Fahrtfreigabe zu erteilen. Erst nach der Erteilung der Fahrtfreigabe wird das Kraftfahrzeug fahrerlos zu dem freien Stellplatz des Parksystems überführt.

Da der Kraftfahrzeugnutzer durch die Eingabe des Freigabe-Codes eine bewusste Handlung ausführen muss, um das autonome Überführen des Kraftfahrzeugs an einen freien Stellplatz zu initiieren, erfolgt die Übergabe des Kraftfahrzeugs vorteilhafterweise besonders fehlersicher. Eine versehentliche Freigabe wird so gut wie ausgeschlossen. Zudem bietet die Eingabe des Freigabe-Codes eine Möglichkeit, das Kraftfahrzeug und den Kraftfahrzeugnutzer sicher einander zuzuordnen, so dass auch in dieser Hinsicht die Übergabe des Kraftfahrzeugs besonders fehlersicher erfolgt. Insbesondere ist auch eine missbräuchliche Freigabe des Kraftfahrzeugs durch einen Dritten ausgeschlossen, da nur dem Fahrer der Freigabe-Code bekannt ist.

Bevorzugt wird als Freigabe-Code eine festgelegte Folge von alphanumerischen Zeichen übermittelt.

Vorzugsweise ist der Freigabe-Code derart gewählt, dass er nicht aus den äußeren Umständen des Parkvorgangs hergeleitet werden kann. Insbesondere enthält er hierbei keine Information, die (ohne Kenntnis der im Parksystem hinterlegten Zuordnung) eine Identifikation des Kraftfahrzeugs, des Fahrzeugnutzers (oder z.B. eines Mobilgeräts desselben) oder des zugewiesenen Parkplatzes erlaubt. Der Freigabe-Code enthält in dieser Ausführungsform der Erfindung beispielsweise keine Information über die Zulassungsnummer des Kraftfahrzeugs, den Namen oder die Telefonnummer des Fahrzeugnutzers und die Kennung oder Position des Parkplatzes. Stattdessen kann der Freigabe-Code im Rahmen der Erfindung beispielsweise durch eine fortlaufende Nummer oder eine zufällig gewählte Zeichenkette gebildet werden. Durch die fehlende Zuordenbarkeit des Freigabe-Codes mit den äußeren Umständen des Parkvorgangs, insbesondere dem Kraftfahrzeug, dem Fahrzeugnutzer oder dem Parkplatz, wird eine besonders hohe Sicherheit gegen Fehler und Missbrauch gewährleistet.

Vorzugsweise wird der Freigabe-Code an einer im Innenraum des Kraftfahrzeugs angeordneten Anzeigeeinheit optisch wahrnehmbar ausgegeben. In einer alternativen aber ebenfalls bevorzugten Ausführungsform wird der Freigabe-Code mittels eines Lautsprechers akustisch wahrnehmbar ausgegeben.

Um den Freigabe-Code an das Parksystem zu übertragen, wird ein mobiles Eingabegerät, insbesondere ein Mobilfunkgerät verwendet. Das Eingabegerät verfügt dabei über eine entsprechende Software (im Falle eines Mobilfunkgeräts über eine entsprechende "Smartphone-App"), die es dem Kraftfahrzeugnutzer ermöglicht, den Freigabe-Code einzugeben und an das Parksystem zu übermitteln.

In einer bevorzugten Ausführungsform übermittelt der Kraftfahrzeugnutzer den Freigabe-Code dann, wenn er das Kraftfahrzeug in einer dafür vorgesehenen Übergabezone des Parksystems abgestellt und verlassen hat. Hierdurch ist vorteilhafterweise für das Parksystem eine definierte Ausgangsposition bei der Übernahme des Kraftfahrzeugs sichergestellt.

Das erfindungsgemäße automatische Parksystem, das dazu eingerichtet ist, ein Kraftfahrzeug fahrerlos zu einem freien Stellplatz des Parksystems zu überführen, ist gekennzeichnet durch eine Steuer- und Kommunikationseinheit, die dazu eingerichtet ist, einen Freigabe-Code an eine Kommunikationseinheit des Kraftfahrzeugs zu übermitteln. Die Steuer- und Kommunikationseinheit ist weiterhin dazu eingerichtet, den Freigabe-Code von einem mobilen Eingabegerät wieder zu empfangen. Schließlich ist die Steuer- und Kommunikationseinheit dazu eingerichtet, die fahrerlose Überführung des Kraftfahrzeugs erst nach dem Empfang des Freigabe-Codes zu veranlassen.

Die für das erfindungsgemäße Verfahren beschriebenen Vorteile und bevorzugten Ausführungsformen gelten auch für das erfindungsgemäße Parksystem.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch ein Parksystem zur fahrerlosen Überführung eines Kraftfahrzeugs zu einem freien Stellplatz gemäß dem Stand der Technik;
- Fig. 2: einen ersten Schritt eines Verfahrens zur Übergabe eines Kraftfahrzeugs an das Parksystem zur fahrerlosen Überführung zu einem freien Stellplatz; und
- Fig. 3: einen zweiten Schritt des Verfahrens gemäß Fig. 2.

Einander entsprechende Teile sind in allen Figuren stets mit gleichen Bezugszeichen versehen.

Zur Erläuterung des in Fig. 1 gezeigten Parksystems 1 gemäß dem Stand der Technik wird auf die Beschreibungseinleitung verwiesen.

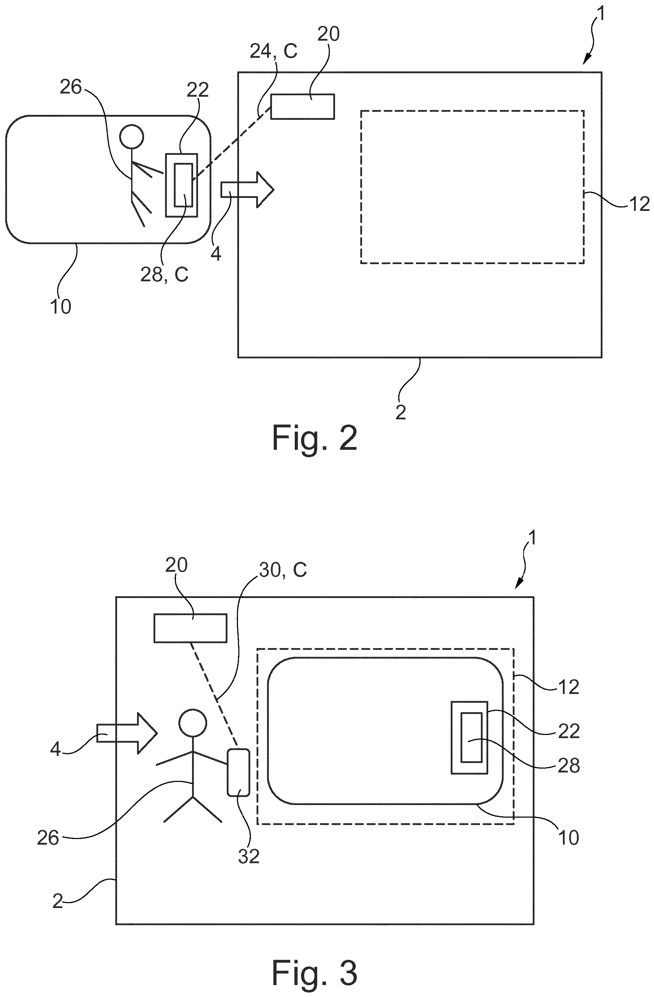

In den Fig. 2 und Fig. 3 ist jeweils ein Einfahrtsbereich eines erfindungsgemäßen Parksystems 1 gezeigt, wobei jeweils aufeinanderfolgende Schritte des erfindungsgemäßen Verfahrens zur Übergabe eines Kraftfahrzeugs 10 an das Parksystem 1 gezeigt sind.

Das erfindungsgemäße Parksystem 1 ist im Wesentlichen wie in Fig. 1 gezeigt aufgebaut. Das Parksystem 1 ist auch als "Autonomous Valet Parking" (AVP) bezeichnet. Das Parksystem 1 umfasst einen Parkplatz 2, der im Rahmen der Erfindung durch eine beliebige Parkinfrastruktur gebildet sein kann, insbesondere auch durch ein Parkhaus oder eine Tiefgarage.

Das Parksystem 1 umfasst eine parksystemseitige Steuer- und Kommunikationseinheit 20, die dazu eingerichtet ist, mit einer kraftfahrzeugseitigen Steuer- und Kommunikationseinheit 22 eine Datenverbindung 24 aufzubauen.

Nähert sich ein Kraftfahrzeug 10, wie in Fig. 2 gezeigt, der Einfahrt 4 des Parksystems 1, wird per Funk die Datenverbindung 24 zwischen dem Kraftfahrzeug 10 und dem Parksystem 1 aufgebaut. Über diese Datenverbindung 24 übermittelt die Steuer- und Kommunikationseinheit einen alphanumerischen Freigabe-Code C an das Kraftfahrzeug 10. Der Freigabe-Code C wird für einen Kraftfahrzeugnutzer 26 sichtbar im Innern des Kraftfahrzeugs 10 an einem Display 28 der Steuer- und Kommunikationseinheit 22 dargestellt. Der Kraftfahrzeugnutzer 26 ist dabei dazu aufgefordert, sich den Freigabe-Code C zu merken.

Der Kraftfahrzeugnutzer 26 fährt das Kraftfahrzeug 10 zur Übergabezone 12 und verlässt das Kraftfahrzeug 10, wie in Fig. 3 angedeutet. Um dem Parksystem 1 zu signalisieren, dass das Kraftfahrzeug 10 nun zur autonomen Überführung auf einen freien Stellplatz 14 freigegeben ist, übermittelt der Kraftfahrzeugnutzer 26 den Freigabe-Code C über eine Datenverbindung 30 an die Steuer- und Kommunikationseinheit 20 des Parksystems 1. Hierzu verwendet er ein mobiles Eingabegerät 32, das vorzugsweise durch ein Mobilfunkgerät ("Smartphone") gegeben ist.

Erst nachdem die Steuer- und Kommunikationseinheit 20 den Freigabe-Code C erfasst hat, wird das Kraftfahrzeug 10 durch das Parksystem 1 angesteuert fahrerlos zu einem freien Stellplatz 14 des Parkplatzes 2 zu manövrieren. Hierzu steuert die Steuer- und Kommunikationseinheit 20 das Kraftfahrzeug 10, konkret dessen Antrieb und Lenkung dazu an, einen freien Stellplatz 14 anzufahren. Alternativ übergibt die Steuer- und Kommunikationseinheit 20 dem Kraftfahrzeug 10, konkret einer Steuereinheit des Kraftfahrzeugs 10, lediglich eine Information darüber, wo sich ein freier Stellplatz 14 befindet, und das Kraftfahrzeug 10 fährt autonom zu diesem Stellplatz.

## Patentansprüche

1. Verfahren zur Übergabe eines Kraftfahrzeugs (10) an ein automatisches Parksystem (1), das dazu eingerichtet ist, das Kraftfahrzeug (10) fahrerlos zu einem freien Stellplatz (14) des Parksystems (1) zu überführen, wobei durch das Parksystem (1) ein Freigabe-Code (C) an einen Kraftfahrzeugnutzer (26) übermittelt wird,
wobei der Kraftfahrzeugnutzer (26) diesen Freigabe-Code (C) nach Verlassen des Kraftfahrzeugs (10) mittels eines mobilen Eingabegeräts (32) wiederum an das Parksystem (1) übermittelt, um eine Fahrtfreigabe zu erteilen, und wobei das Kraftfahrzeug (10) erst nach der Erteilung der Fahrtfreigabe fahrerlos zu dem freien Stellplatz (14) des Parksystems (1) überführt wird,
**dadurch gekennzeichnet, dass**
der Freigabe-Code (C) durch eine parksystemseitige Steuer- und Kommunikationseinheit (20) über eine Datenverbindung (24)
an eine kraftfahrzeugseitige Steuer- und Kommunikationseinheit (22) übermittelt und in dem Kraftfahrzeug (10) für den Kraftfahrzeugnutzer (26) wahrnehmbar ausgegeben wird, und zur Erteilung der Fahrtfreigabe der Freigabe-Code (C) über eine Datenverbindung (30) zwischen der parksystemseitigen Steuer- und Kommunikationseinheit (20) und dem mobilen Eingabegerät (32) übermittelt wird.

2. Verfahren nach Anspruch 1,
**dadurch gekennzeichnet, dass**
als Freigabe-Code (C) eine festgelegte Folge von alphanumerischen Zeichen übermittelt wird.

3. Verfahren nach Anspruch 1 oder 2,
**dadurch gekennzeichnet, dass**
der Freigabe-Code (C) an einer im Innenraum des Kraftfahrzeugs (10) angeordneten Anzeigeeinheit (28) der kraftfahrzeugseitigen Steuer- und Kommunikationseinheit (22) ausgegeben wird.

4. Verfahren nach einem der Ansprüche 1 bis 3,
**dadurch gekennzeichnet, dass**
der Kraftfahrzeugnutzer (26) den Freigabe-Code (C) übermittelt, wenn er das Kraftfahrzeug (10) in einer dafür vorgesehenen Übergabezone (12) des Parksystems (1) abgestellt hat.

5. Automatisches Parksystem (1), das dazu eingerichtet ist, ein Kraftfahrzeug (10) fahrerlos zu einem freien Stellplatz (14) des Parksystems (1) zu überführen, wobei das Parksystem (1) eine parksystemseitige Steuer- und Kommunikationseinheit (20) umfasst,
- die dazu eingerichtet ist, einen Freigabe-Code (C) zu übermitteln,
- die dazu eingerichtet ist, den Freigabe-Code (C) über eine Datenverbindung (30) zwischen der parksystemseitigen Steuer- und Kommunikationseinheit (20) und einem mobilen Eingabegerät (32) wieder zu empfangen, und
- die weiterhin dazu eingerichtet ist, erst nach dem Empfang des Freigabe-Codes (C) die fahrerlose Überführung des Kraftfahrzeugs (10) zu dem freien Stellplatz (14) zu veranlassen,
**dadurch gekennzeichnet, dass**
die Steuer- und Kommunikationseinheit (20) dazu eingerichtet ist, den Freigabe-Code (C) über eine Datenverbindung (24) an eine kraftfahrzeugseitige Steuer- und Kommunikationseinheit (22) zu übermitteln.

## Claims

1. Method for transferring a motor vehicle (10) in an automatic parking system (1), which is configured to transfer the motor vehicle (10) in a driverless manner to a free parking space (14) of the parking system (1), wherein a release code (C) is transmitted by the parking system (1) to a motor vehicle user (26),
wherein the motor vehicle user (26), after leaving the motor vehicle (10), transmits this release code (C) in turn to the parking system (1) by means of a mobile input appliance (32), in order to issue a drive release, and wherein the motor vehicle (10) is transferred to the free parking space (14) of the parking system (1) in a driverless manner only after the drive release has been issued,
**characterized in that**
the release code (C) is transmitted by a control and communication unit (20) on the parking system side via a data link (24) to a control and communication unit (22) on the motor vehicle side and is output in the motor vehicle (10) so as to be perceptible to the motor vehicle user (26) and
the release code (C) is transmitted via a data link (30) between the control and communication unit (20) on the parking system side and the mobile input appliance (32) in order to issue the drive release.

2. Method according to claim 1,
**characterized in that**
a defined sequence of alphanumeric characters is transmitted as the release code (C).

3. Method according to claim 1 or 2,
**characterized in that**
the release code (C) is output on a display unit (28) of the control and communication unit (22) on the motor vehicle side, which display unit is arranged in the interior the motor vehicle (10).

4. Method according to any one of claims 1 to 3,
**characterized in that**
the motor vehicle user (26) transmits the release code (C) when they have parked the motor vehicle (10) in a transfer zone (12) of the parking system (1) provided for this purpose.

5. Automatic parking system (1), which is configured to transfer a motor vehicle (10) in a driverless manner to a free parking space (14) of the parking system (1), wherein the parking system (1) comprises a control and communication unit (20) on the parking system side,
- which is configured to transmit a release code (C),
- which is configured to receive the release code (C) again via a data link (30) between the control and communication unit (20) on the parking system side and a mobile input appliance (32), and
- which is furthermore configured to initiate the driverless transfer of the motor vehicle (10) to the free parking space (14) only once the release code (C) has been received,
**characterized in that**
the control and communication unit (20) is configured to transmit the release code (C) via a data link (24) to a control and communication unit (22) on the motor vehicle side.

## Revendications

1. Procédé de remise d'un véhicule automobile (10) à un système de stationnement (1) automatique qui est conçu afin d'amener le véhicule automobile (10) sans conducteur à une place de stationnement libre du système de stationnement (1), dans lequel un code d'autorisation (C) est transmis à un utilisateur du véhicule automobile (26) par le système de stationnement (1),
dans lequel l'utilisateur du véhicule automobile (26), après avoir quitté le véhicule automobile (10), transmet à son tour ce code d'autorisation (C) au moyen d'un appareil de saisie (32) mobile au système de stationnement (1) afin de délivrer une autorisation de marche, et dans lequel le véhicule automobile (10) est amené sans conducteur à la place de stationnement (14) libre du système de stationnement (1) seulement après la délivrance de l'autorisation de marche,
**caractérisé en ce que**
le code d'autorisation (C) est transmis par une unité de commande et de communication (20) côté système de stationnement par le biais d'une liaison de données (24) à une unité de commande et de communication (22) côté véhicule automobile et est émis de manière perceptible dans le véhicule automobile (10) pour l'utilisateur du véhicule automobile (26) et
le code d'autorisation (C) est transmis pour la délivrance de l'autorisation de marche par le biais d'une liaison de données (30) entre l'unité de commande et de communication (20) côté système de stationnement et l'appareil de saisie (32) mobile.

2. Procédé selon la revendication 1,
**caractérisé en ce que**
une suite définie de caractères alphanumériques est transmise comme code d'autorisation (C).

3. Procédé selon la revendication 1 ou 2,
**caractérisé en ce que**
le code d'autorisation (C) est émis au niveau d'une unité d'affichage (28) de l'unité de commande et de communication (22) côté véhicule automobile qui agencée dans l'habitacle du véhicule automobile (10).

4. Procédé selon l'une quelconque des revendications 1 à 3,
**caractérisé en ce que**
l'utilisateur du véhicule automobile (26) transmet le code d'autorisation (C) lorsqu'il a garé le véhicule automobile (10) dans une zone de remise (12) du système de stationnement (1) prévue à cet effet.

5. Système de stationnement (1) automatique qui est conçu afin d'amener un véhicule automobile (10) sans conducteur à une place de stationnement (14) libre du système de stationnement (1), dans lequel le système de stationnement (1) comprend une unité de commande et de communication (20) côté système de stationnement,
- qui est conçue afin de transmettre un code d'autorisation (C),
- qui est conçue afin de recevoir de nouveau le code d'autorisation (C) par le biais d'une liaison de données (30) entre l'unité de commande et de communication (20) côté système de stationnement et un appareil de saisie (32) mobile et
- qui est conçue en outre afin d'initier le transfert sans conducteur du véhicule automobile (10) à la place de stationnement (14) libre seulement après la réception du code d'autorisation (C),
**caractérisé en ce que**
l'unité de commande et de communication (20) est conçue afin de transmettre le code d'autorisation (C) à une unité de commande et de communication (22) côté véhicule automobile par le biais d'une liaison de données (24).
